# EUROPÄISCHE PATENTSCHRIFT

(11) **EP 0 570 434 B1**
(45) Veröffentlichungstag und Bekanntmachung des Hinweises auf die Patenterteilung: **24.05.1995**
(21) Anmeldenummer: 92903956.8
(22) Anmeldetag: 06.02.1992
(51) Int. Cl.: B05B 15/12, C02F 1/46

(54) **VERFAHREN UND VORRICHTUNG ZUR OVERSPRAY-REZIRKULATION FÜR WASSERVERDÜNNBARE LACKE**
METHOD AND DEVICE FOR WATER-DILUTABLE LACQUER OVERSPRAY RECYCLING
PROCEDE ET DISPOSITIF DE RECYCLAGE DES PROJECTIONS PERDUES DE LAQUE DILUABLE A L'EAU

(30) Priorität: 07.02.1991 AT 260/91; 02.12.1991 AT 2386/91
(43) Veröffentlichungstag der Anmeldung: 24.11.1993
(73) Patentinhaber: Vianova Kunstharz Aktiengesellschaft, A-8402 Werndorf (AT)
(72) Erfinder: DAIMER, Wolfgang, A-8010 Graz (AT); GESSNER, Werner, A-8010 Graz (AT); KOCH, Walter, A-8042 Graz (AT); LUTTENBERGER, Johann, A-8053 Graz (AT); STANIA, Herbert, A-8073 Feldkirchen (AT)
(86) Internationale Anmeldenummer: AT9200014
(87) Internationale Veröffentlichungsnummer: WO9213644

(56) Entgegenhaltungen:
- EP-A- 0 319 076
- DE-A- 2 162 696
- PATENT ABSTRACTS OF JAPAN vol. 10, no. 166 (C-353) 13. Juni 1986 & JP-A-61019799 (MAZDA KK) 28 JANUARY 1986

## Beschreibung

Die Erfindung betrifft ein Verfahren für ein Overspray-Recycling beim Einsatz von Lacken auf Basis von wasserlöslichen Bindemitteln in industriellen Spritzlackieranlagen durch Wiedergewinnung des Lackmaterials mittels elektrischer Abscheidung und Resolubilisierung durch Salzbildung, sowie eine Anlage zur Durchführung des Verfahrens.

Beim Verspritzen von Lacken erreicht ein großer Anteil des versprühten Lackes nicht das Lackierobjekt, sondern geht als "Overspray" an diesem vorbei. Dieser Overspray-Verlust erreicht, je nach Lackieranlage und Form des Werkstückes, 30 - 60 Gew.-%, in der Automobilindustrie bei der Lackierung von Karosserien sogar bis zu 65 Gew.-% des eingesetzten Lackmaterials. Der Overspray wird z.B. an Prallblechen, überwiegend jedoch durch Naßauswaschung (Berieselungswasser), von der Abluft der Spritzkabine getrennt, um Emissionen in die Luft zu vermeiden.

Es fehlt nicht an Vorschlägen und Versuchen, diesen Materialverlust einerseits aus ökonomischen Gründen, andererseits unter dem Druck der Umweltschutz-Gesetzgebung drastisch zu vermindern.

Für Lacke auf Basis von in organischen Lösemitteln gelösten Bindemitteln wird vorgeschlagen, den Overspray durch Auffangen auf Scheiben und Bändern etc. nach Lösemittelzusatz wieder direkt der Verwertung zuzuführen. In den meisten Fällen wird der Overspray in wasserberieselten Spritzkabinen aufgefangen und die Lackreste durch chemische Koagulation aus dem Wasser entfernt. Die Lackkoagulate werden durch mechanische Entwässerung gesammelt und je nach Brauchbarkeit in verschiedener Weise für andere Zwecke eingesetzt oder sie müssen gesetzeskonform entsorgt werden (siehe u. a. P. Bachhausen, "Entsorgung von Lackabfällen", FARBE + LACK, 96, 12/1990, 691 ff. oder EP-A2-0376020).

Im Falle von wasserverdünnbaren Lacken löst sich der Overspray in dem Berieselungswasser der Spritzkabine und muß aus diesem vor Einleitung in einen Vorfluter durch Zusatz von Fällungschemikalien, Entklebungsmitteln u. dgl. abgetrennt werden. Durch diese Zusätze entsteht ein konzentrierter "Lackschlamm", der für die weitere Verwendung zur Beschichtung unbrauchbar geworden ist und im allgemeinen auf Sondermülldeponien gelagert bzw. verbrannt werden muß.

In der DE-A-21 62 696 wird ein Verfahren zur Beseitigung von Lackresten aus dem beim Elektrophorese-Verfahren anfallenden Spülwasser durch elektrische Abscheidung beschrieben. Das abgeschiedene Material wird durch Umpolung der Abscheideelektrode wieder von dieser entfernt und abgeschöpft. Durch dieses Verfahren ist es möglich, den Anteil von Lackresten in derartigen Spülwässern abzusenken, doch wird das nach der Umpolung wieder ins Bad gelangende Material - sofern es sich, auch nach Anlegen einer entsprechenden Überspannung, überhaupt von der Abscheidungselektrode ablösen läßt - durch das im Bad befindliche Neutralisationsmittel zumindest anteilig wieder aufgelöst, bevor es abgeschöpft werden kann. Das Verfahren hat keinen Eingang in die Praxis gefunden.

Ein ähnliches Verfahren wird auch in der JP-A-61019799 beansprucht, wobei die Abscheideelektrode mit einer Filterpapierschicht bedeckt ist. Das in dieser Schicht abgelagerte Material kann offensichtlich nicht rückgewonnen werden.

Gemäß EP-A2-0319076 wird eine Entfernung der Lackreste aus dem Spülwasser von Farb- und Lackspritzanlagen durch Elektrofiltration vorgeschlagen. Wegen der hohen Leitfähigkeit der Bindemittel ist das Verfahren für wasserverdünnbare Lacke in wirtschaftlicher Form nicht einsetzbar.

Es wurde nun gefunden, daß ein weitgehend quantitatives Recycling des Overspraymaterials beim Einsatz von Lacken auf Basis von wasserlöslichen Bindemitteln in industriellen Spritzanlagen durch eine elektrische Abscheidung des gelösten Materials, ein anschließendes mechanisches Abstreifen und/oder Abspülen des abgeschiedenen Materials von der Elektrode und dessen Resolubilisierung in einem Auflösebecken möglich ist.

Die Erfindung betrifft demgemäß ein Verfahren für ein weitgehend quantitatives Overspray-Recycling beim Einsatz von Lacken auf Basis von wasserlöslichen Bindemitteln in industriellen, wasserberieselten Spritzlackieranlagen, welches dadurch gekennzeichnet ist, daß man das Umlaufwasser der Spritzkabine, in welchem das Overspraymaterial in gelöster Form vorliegt, in einem oder mehreren mit entsprechenden Elektroden eines Gleichstromkreises ausgestatteten Zwischenbecken durch Elektrobeschichtung einer oder mehrerer Elektroden vom Lackmaterial befreit, das abgeschiedene Material von der Elektrode durch mechanisches Abstreifen und/oder Absprühen abnimmt, in ein Auflösebecken überführt und durch geeignete Neutralisationsmittel bzw. gegebenenfalls Hilfslösemittelzusatz resolubilisiert und gegebenenfalls nach Ergänzung einzelner Komponenten wieder in den Lackvorratsbehälter für den Einsatz in der Spritzanlage zurückführt und gleichzeitig das gereinigte Umlaufwasser wieder dem Reinigungskreislauf zuführt.

Die Erfindung betrifft weiters eine Anlage zur Durchführung des Verfahrens.

Es hat sich gezeigt, daß sich die Komponenten des Lackbindemittels durch den Abscheidungsvorgang und die Resolubilisierung nicht nachteilig verändern, soferne sie nicht wesentliche Anteile an leichtoxidierbaren Rohstoffen, wie ungesättigte Fettsäuren oder Maleinatöle, enthalten. Besonders vorteilhaft kann das Verfahren eingesetzt werden, wenn das wasserlösliche Bindemittel anionische gesättigte Polyesterharze, Polyurethanharze oder Acrylatcopolymerisate enthält. Bindemittel dieser Art werden vor allem in Lacken für den Spritzauftrag in industriellen Anlagen eingesetzt, z.B. für Füllerschichten in der Automobilindustrie oder für Decklacke. Durch die elektrische Abscheidung des Overspraymaterials ergibt sich im Idealfall eine vollständige Materialausnutzung ohne ökologisch bedenkliche Abfallprodukte und ohne notwendige Zugaben systemfremder Koagulationsmittel.

Das Verfahren der Elektroabscheidung von Lackmaterialien mittels Gleichstrom ist in mehreren Ausführungsformen bekannt und wird zur Elektrotauchgrundierung bzw. zur Erhöhung des Korrosionsschutzes metallischer Werkstücke weltweit in großem Umfang verwendet.

Das erfindungsgemäße Verfahren erweitert den Anwendungsbereich der Elektrobeschichtung zugunsten einer verbesserten Materialausnutzung wasserverdünnbarer Spritzlacke und der gleichzeitigen Verringerung bzw. Vermeidung einer Verunreinigung von Wasser bei der Applikation solcher Lackmaterialien. Es eröffnet sich somit ein überraschend einfacher und für den Durchschnittsfachmann nicht vorhersehbarer Weg, beliebige wasserlösliche Lackmaterialien anionischer bzw. kationischer Natur zum Zwecke des verbesserten Umweltschutzes bei gleichzeitiger Wiedereinsetzmöglichkeit aus dem Berieselungswasser von Spritzanlagen zu entfernen. Die derzeit z.B. industriell eingesetzten wasserverdünnbaren Füller- bzw. Decklackmaterialien enthalten im allgemeinen Polymere anionischer Natur. Demgemäß wird der Overspray-Anteil aus ihren wäßrigen Lösungen im Kabinenumlaufwasser an der Anode abgeschieden. Die Resolubilisierung in Wasser erfolgt daher in bekannter Weise mit Basen, vorzugsweise Ammoniak, Aminen, insbesonders Alkanolaminen, gegebenenfalls in Gegenwart von Hilfslösemitteln, wie Alkoholen, Glykolethern etc.

Selbstverständlich können bei entsprechender Abänderung des Verfahrens auch kationische Materialien verarbeitet werden, wobei im Prinzip nur die Polung der Abscheidungselektrode verändert werden muß.

Weitere Merkmale und Einzelheiten der Erfindung ergeben sich aus der Prinzipskizze (Fig. 1), einer Ausführungsform des Verfahrens (Fig. 2 und 3), und aus den Patentansprüchen.

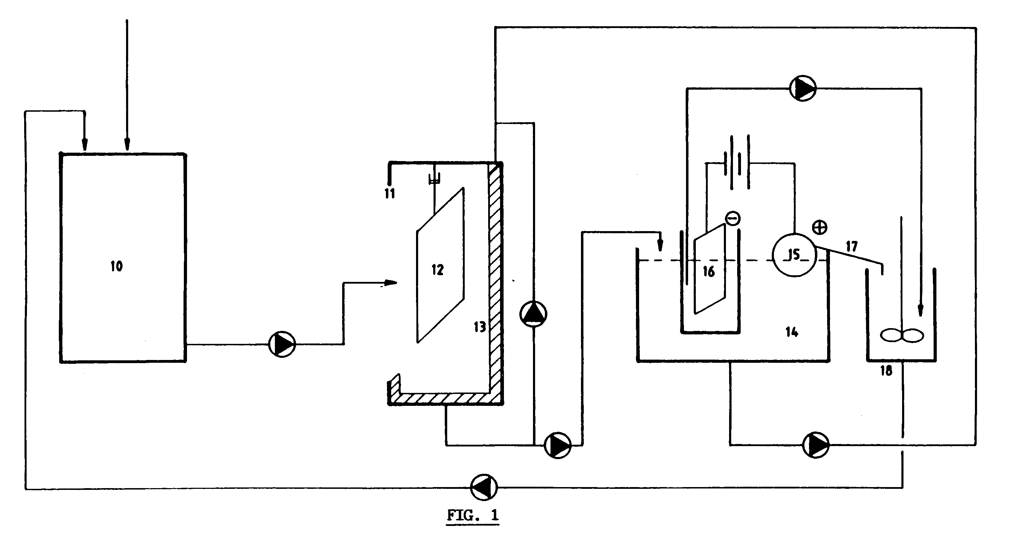

Die Fig. 1 zeigt einen Vorratsbehälter (10) für das verarbeitungsfertige wäßrige Lackmaterial, welches über eine Rohrleitung zum Spritzstand (11) gefördert wird. Der Overspray, der das Objekt (12) nicht erreicht, wird von einem Vorhang aus vollentsalztem Wasser (13) aufgenommen, wobei das Bindemittel aufgrund seines Neutralisationszustandes bzw. seines Gehalts an Hilfslösemitteln wieder in Lösung geht. Es handelt sich dabei, wie auch beim Ausgangslackmaterial, nicht um eine echte Lösung, sondern um eine stabile, micellare Verteilung im wäßrigen Medium. Im Gegensatz zu den üblichen Verfahren enthält der Wasservorhang keine Zusätze, wie Koagulierungsmittel etc., die eine Wiederverwendung des Lackmaterials unmöglich machen würden.

Das mit Overspraymaterial angereicherte Kabinenumlaufwasser gelangt - gegebenenfalls nach wiederholtem Durchgang durch die Spritzanlage - in mindestens ein Abscheidebecken (14) mit Abscheideelektroden (15) und entsprechenden Gegenelektroden (16), die sich, um eine Anreicherung von Neutralisationsmittel zu vermeiden, vorteilhafterweise in einer Kammer aus semipermeablem Material befinden.

Der Festkörpergehalt des in das Abscheidungsbecken gelangenden Materials liegt zwischen 1 und 35 Gew.-%, vorzugsweise zwischen 5 und 25 Gew.-%.

Die Abscheideelektrode (15) ist so konstruiert, daß das abgeschiedene Lackmaterial durch eine geeignete Vorrichtung (17) von der Elektrode abgenommen und dem Auflösebecken (18) zugeführt werden kann.

Die Abscheidungselektrode kann beispielsweise in Form einer rotierenden Scheibe oder Walze - vorzugsweise aus Edelstahl oder mit einer durch Edelmetalle vergüteten Oberfläche - ausgebildet sein oder ein über mindestens zwei isolierte Rollen laufendes, geschlossenes und aus einem leitfähigen Material bestehendes Band sein. Für diesen Zweck kann z.B. ein Teflon®-Band mit aufgepreßtem Metallgeflecht verwendet werden. Die Abnahme des abgeschiedenen Materials erfolgt beispielsweise durch einen Schaber (17). Im Auflösebecken (18) wird das Lackmaterial in vorgelegtes, das Neutralisationsmittel und gegebenenfalls Hilfslösemittel enthaltendes Wasser eingerührt und gegebenenfalls nach analytischer Untersuchung durch Zugabe fehlender Komponenten, wie Vernetzungsmittel, Pigmentpasten, Lackhilfsmittel etc. rekonditioniert. Das Material wird vorteilhafterweise anteilig dem Frischlackmaterial im Vorratsbehälter (10) zugemischt. Die Rekonditionierung und/oder die Zugabe zum Frischmaterial kann auch über weitere, in der Zeichnung Fig. 1 nicht angegebene Zwischenbehälter erfolgen.

Die im Abscheidebecken (14) verbleibende wäßrige Phase wird, gegebenenfalls nach einer Feinfiltration, wieder dem Wasserkreislauf zugeführt.

Bei entsprechender Ausführung der Anlage kann das in der Elektrodenkammer (16) angereicherte Neutralisationsmittel zur Rekonditionierung des Lackes im Auflösebecken (18) herangezogen werden, wodurch der zu entsorgende Anteil weiter verringert wird.

Die praktischen Erfahrungen zeigen, daß der abgeschiedene Lack - in Abhängigkeit von seiner Zusammensetzung - sich entweder leicht von der Abscheideelektrode abscheren und in das Wiederauflösebecken rückführen läßt oder er sich als klebrige Masse abscheidet, welche nur unter Schwierigkeiten in das Wiederauflösebecken zu transportieren ist.

Durch eine spezielle Ausführungsform der Recycling-Anlage, insbesonders durch eine räumliche Trennung des Abscheidungs- bzw. Abstreifungsteils vom Wiederauflösungsbecken, können die Probleme, die in der Praxis durch die unterschiedliche Konsistenz der anfallenden Lacke entstehen, überwunden werden.

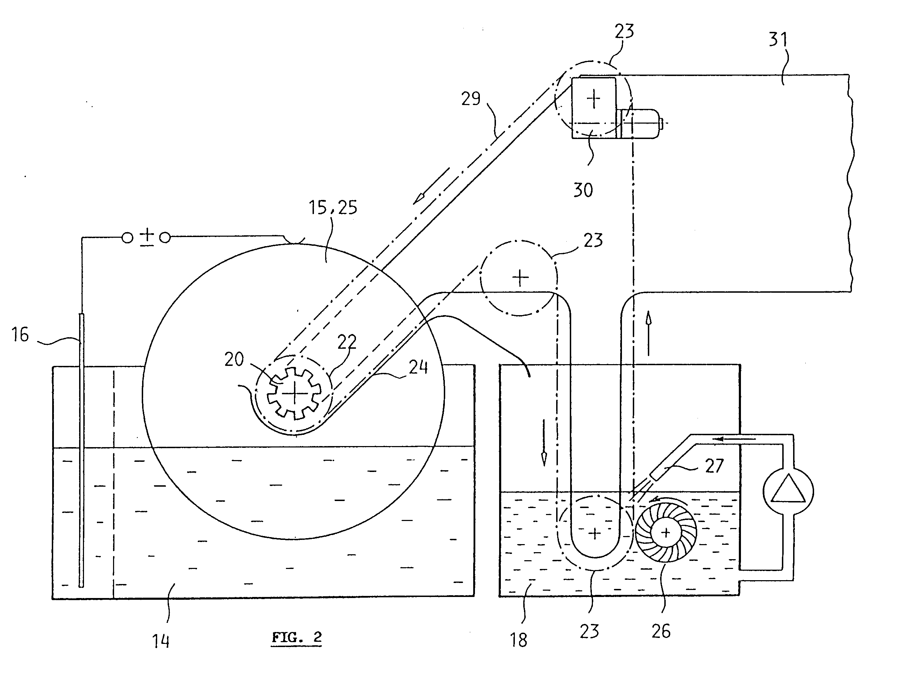

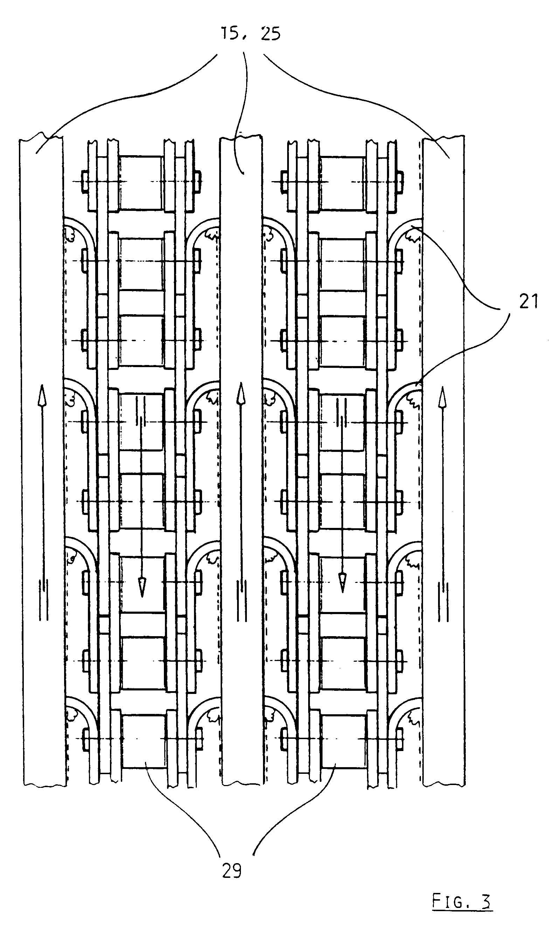

Die beanspruchte Vorrichtung wird in Fig. 2 und Fig. 3 schematisch dargestellt, wobei die Kennziffern die in den Ansprüchen bzw. in der Beschreibung angegebene Bedeutung haben.

Die in einem Abscheidebecken (14) befindliche Abscheideelektrode (15) ist als Scheibenstapel (25) ausgebildet, der auf einer Keilwelle (20) axial verschiebbar ist und sich synchron dreht, und dessen einzelne Scheiben mit einstellbarer Kraft auf die zwischen den Scheiben sich befindlichen und Abstreifelemente (21) tragenden endlosen Ketten (29) gedrückt werden, wobei die Ketten (29) über die auf der Keilwelle (20) axial verschiebbaren, aber mit den Scheiben (25) und mit der Keilwelle (20) verdrehsteif gekoppelten Kettenräder (22) geführt werden und weiter über die Umlenkräder (23) in das Auflösebecken (18) laufen, in welchem mit Hilfe von rotierenden Bürsten (26) und/oder durch Besprühen mit über Pumpen und Düsen (27) umgewälztem Badmaterial das Lackmaterial von den Abstreifelementen (21) abgelöst und zur leichteren Wiederauflösung in einem Dissolver homogenisiert wird.

Die Abstreifelemente (21) jedes Kettenglieds beschreiben auf den ihnen zugeordneten Scheiben (25) spiralförmige, sich kreuzende Bahnen. Bei einer Umdrehung der Scheibe wird die gesamte Fläche derselben mindestens einmal abgestreift.

Der Antrieb (30) des Systems kann an jeder Stelle erfolgen, vorzugsweise wird der Kettenstrang (29) von einer die Umlenkräder (23) tragenden Welle angetrieben.

Alle Elemente der Abscheidevorrichtung sind auf einem Montagerahmen (31) befestigt, der vom Abscheidebecken (14) bzw. vom Auflösebecken (18) getrennt werden kann, wodurch die Umstellung bei Farbwechsel oder Wechsel des Lacksystems erleichtert wird.

Fig. 3 ist eine schematische Darstellung eines Kettenteils (29) mit den Abstreifelementen (21).

Vorteilhafterweise befindet sich knapp unter dem Kettenstrang (29) eine Rinne (24), wodurch ein Zurückfallen von abgelöstem Lackmaterial in das Abscheidungsbecken verhindert wird.

Mittels der beanspruchten Ausführungsform für die Recycling-Anlage können alle in ionisch stabilisierter Form vorliegenden Wasserlacke aus dem Overspray von wasserberieselten Spritzanlagen wiedergewonnen werden.

## Patentansprüche

1. Verfahren für ein weitgehend quantitatives Overspray-Recycling beim Einsatz von Lacken auf Basis von wasserlöslichen Bindemitteln in industriellen, wasserberieselten Spritzlackieranlagen, dadurch gekennzeichnet, daß man das Umlaufwasser der Spritzkabine, in welchem das Overspraymaterial in gelöster Form vorliegt, in einem oder mehreren mit entsprechenden Elektroden ausgestatteten Zwischenbecken durch Elektrobeschichtung einer oder mehrerer Elektroden vom Lackmaterial befreit, das abgeschiedene Material von der Elektrode durch mechanisches Abstreifen und/oder Absprühen abnimmt, in ein Auflösebecken überführt und durch geeignete Neutralisationsmittel bzw. gegebenenfalls Hilfslösemittelzusatz resolubilisiert und gegebenenfalls nach Ergänzung einzelner Komponenten wieder in den Lackvorratsbehälter für den Einsatz in der Spritzanlage zurückführt und gleichzeitig das gereinigte Umlaufwasser wieder dem Reinigungskreislauf zuführt.

2. Verfahren nach Anspruch 1, dadurch gekennzeichnet, daß das Umlaufwasser vor der Weiterleitung in das Abscheidungsbecken solange in der Spritzanlage zirkuliert, bis ein Festkörpergehalt von 1 bis 35 Gew.-%, vorzugsweise von 5 bis 25 Gew.-%, erreicht ist.

3. Verfahren nach Anspruch 1, dadurch gekennzeichnet, daß die Abscheidungselektrode scheibenförmig ausgebildet ist.

4. Verfahren nach Anspruch 1, dadurch gekennzeichnet, daß die Abscheidungselektrode walzenförmig ausgebildet ist.

5. Verfahren nach Anspruch 1, dadurch gekennzeichnet, daß die Abscheidungselektrode als Endlosband aus einem elektrisch leitenden Material über zwei isolierte Rollen ausgebildet ist.

6. Verfahren nach Anspruch 1, dadurch gekennzeichnet, daß zumindestens die Oberfläche der Abscheidungselektrode aus Edelstahl und/oder Silber und/oder Gold und/oder Platin besteht.

7. Verfahren nach den Ansprüchen 1 bis 5, dadurch gekennzeichnet, daß die Gegenelektrode in einer Kammer aus semipermeablem Material angeordnet ist.

8. Verfahren nach den Ansprüchen 1 bis 6, dadurch gekennzeichnet, daß das an der Gegenelektrode angereicherte Neutralisationsmittel dem Auflösebecken zugeführt wird.

9. Verfahren nach den Ansprüchen 1 bis 7, dadurch gekennzeichnet, daß als Lackmaterial anionische oder kationische Polyesterharze und/oder Polyurethanharze und/oder Acrylatcopolymerisate eingesetzt werden.

10. Verfahren nach den Ansprüchen 1 bis 8, dadurch gekennzeichnet, daß in das Auflösebecken und/oder in ein weiteres Rekonditionierungsbecken analytisch festgestellte Fehlmengen einzelner Lackkomponenten zugesetzt werden.

11. Anlage zur Durchführung des Verfahrens nach einem der vorhergehenden Ansprüche für ein weitgehend quantitatives Overspray-Recycling beim Einsatz von Lacken auf Basis von wasserlöslichen Bindemitteln in industriellen, wasserberieselten Spritzlackieranlagen, dadurch gekennzeichnet, daß die in einem Abscheidebecken (14) befindliche Abscheideelektrode (15) als Scheibenstapel (25) ausgebildet ist, der auf einer Keilwelle (20) axial verschiebbar ist und sich synchron dreht, und dessen einzelne Scheiben mit einstellbarer Kraft auf die zwischen den Scheiben sich befindlichen und Abstreifelemente (21) tragenden endlosen Ketten (29) gedrückt werden, wobei die Ketten (29) über die auf der Keilwelle (20) axial verschiebbaren, aber mit den Scheiben (25) und mit der Keilwelle (20) verdrehsteif gekoppelten Kettenräder (22) geführt werden und weiter über die Umlenkräder (23) in das Auflösebecken (18) laufen, in welchem mit Hilfe von rotierenden Bürsten (26) und/oder durch Besprühen mit über Pumpen und Düsen (27) umgewälztem Badmaterial das Lackmaterial von den Abstreifelementen (21) abgelöst und zur leichteren Wiederauflösung in einem Dissolver homogenisiert wird.

12. Anlage nach Anspruch 11, dadurch gekennzeichnet, daß der die Elemente der Abscheidevorrichtung tragende Montagerahmen (31) vom Abscheidebecken (14) bzw. vom Auflösebecken (18) getrennt werden kann.

13. Anlage nach Anspruch 11, dadurch gekennzeichnet, daß sich knapp unter dem Kettenstrang (29) eine Rinne (24) befindet.

## Claims

1. Process for substantially quantitative overspray recycling on use of paints based on water-soluble binders in industrial water-sprinkled paint-spraying installations, characterized in that the circulating water of the spray booth, in which the overspray material is in a dissolved form, is freed of paint material, in one or more intermediate tanks fitted with appropriate electrodes, by electro-coating of one or more electrodes, the deposited material is removed from the electrode by mechanical stripping and/or spraying, transferred into a dissolving tank and resolubilized by suitable neutralizing agents and/or, if necessary, addition of auxiliary solvent and, if necessary after replenishment of individual components, recycled into the paint stock tank for use in the spraying installation, and simultaneously the purified circulating water is returned to the purification circulation.

2. Process according to Claim 1, characterized in that the circulating water, before it is passed on into the deposition tank, is circulated in the spraying installation until a solids content of 1 to 35% by weight, preferably 5 to 25% by weight, has been reached.

3. Process according to Claim 1, characterized in that the deposition electrode is of disc-shaped design.

4. Process according to Claim 1, characterized in that the deposition electrode is of roll-shaped design.

5. Process according to Claim 1, characterized in that the deposition electrode is designed as a continuous strip of electrically conductive material, passing over two insulated rollers.

6. Process according to Claim 1, characterized in that at least the surface of the deposition electrode consists of stainless steel and/or silver and/or gold and/or platinum.

7. Process according to Claims 1 to 5, characterized in that the counter-electrode is located in a chamber of semi-permeable material.

8. Process according to Claims 1 to 6, characterized in that the neutralizing agent concentrated on the counter-electrode is fed to the dissolving tank.

9. Process according to Claims 1 to 7, characterized in that anionic or cationic polyester resins and/or polyurethane resins and/or acrylate copolymers are used as the paint material.

10. Process according to Claims 1 to 8, characterized in that deficient quantities of individual paint components, determined by analysis, are made up by addition to the dissolving tank and/or to a further reconditioning tank.

11. Installation for carrying out the process according to one of the preceding claims for substantially quantitative overspray recycling on use of paints based on water-soluble binders in industrial water-sprinkled paint-spraying installations, characterized in that the deposition electrode (15) located in a deposition tank (14) is designed as a stack (25) of discs which is axially displaceable on a splined shaft (20) and which rotates synchronously, and whose individual discs are pressed with adjustable force onto the endless chains (29) which are located between the discs and which carry stripping elements (21), the chains (29) being guided over the chain wheels (22), which are axially displaceable on the splined shaft (20) but are coupled with the discs (25) and with the splined shaft (20) so as to be torsionally rigid, and run further over the deflection wheels (23) into the dissolving tank (18) in which, with the aid of rotating brushes (26) and/or by spraying with bath material which is circulated via pumps and nozzles (27), the paint material is detached by the stripping elements (21) and for easier redissolution is homogenized in a dissolver.

12. Installation according to Claim 11, characterized in that the mounting frame (31) which carries the elements of the deposition apparatus can be separated from the deposition tank (14) and/or from the dissolving tank (18).

13. Installation according to Claim 11, characterized in that a channel (24) is located just below the chain strand (29).

## Revendications

1. Procédé de recyclage largement quantitatif des projections perdues lors de l'utilisation de peintures à base de liants solubles dans l'eau dans des installations industrielles de peinture par pulvérisation avec ruissellement d'eau, caractérisé en ce que, dans un ou plusieurs réservoirs intermédiaires équipés d'électrodes appropriées, on débarrasse de la peinture l'eau de circulation de la cabine de pulvérisation, contenant sous forme dissoute la matière des projections perdues, par revêtement électrolytique d'une ou plusieurs électrodes, on enlève par raclage et/ou pulvérisation mécanique la matière déposée sur les électrodes, on la transfère dans un réservoir de dissolution et on la remet en solution à l'aide d'agents de neutralisation appropriés et en ajoutant éventuellement un solvant auxiliaire, et, après l'avoir éventuellement complétée en les constituants individuels, on la renvoie dans le réservoir de peinture à utiliser dans l'installation de pulvérisation, et on renvoie simultanément l'eau de circulation purifiée dans le circuit de lavage.

2. Procédé selon la revendication 1, caractérisé en ce que, avant d'être envoyée dans les réservoirs de séparation, l'eau de circulation circule dans l'installation de pulvérisation jusqu'à ce que soit atteinte une teneur en matière solide de 1 à 35 % en masse, de préférence de 5 à 25 % en masse.

3. Procédé selon la revendication 1, caractérisé en ce que l'électrode de séparation est en forme de disque.

4. Procédé selon la revendication 1, caractérisé en ce que l'électrode de séparation est en forme de cylindre.

5. Procédé selon la revendication 1, caractérisé en ce que l'électrode de séparation est formée d'une bande sans fin en un matériau conducteur de l'électricité disposée sur deux rouleaux isolés.

6. Procédé selon la revendication 1, caractérisé en ce que au moins la surface de l'électrode de séparation est en acier spécial et/ou en argent et/ou en or et/ou en platine.

7. Procédé selon les revendications 1 à 5, caractérisé en ce que la contre-électrode est disposée dans une chambre en une matière semi-perméable.

8. Procédé selon les revendications 1 à 6, caractérisé en ce que l'agent de neutralisation concentré au niveau de la contre-électrode est envoyé dans le réservoir de dissolution.

9. Procédé selon les revendications 1 à 7, caractérisé en ce que l'on utilise comme peinture des résines polyester et/ou des résines polyuréthane et/ou des copolymères d'acrylate, anioniques ou cationiques.

10. Procédé selon les revendications 1 à 8, caractérisé en ce que, dans le réservoir de dissolution et/ou dans un autre réservoir de reconditionnement, on ajoute les quantités manquantes, déterminées par analyse, des différents constituants de la peinture.

11. Installation pour la mise en oeuvre du procédé selon l'une des revendications précédentes pour un recyclage largement quantitatif des projections perdues lors de l'utilisation de peintures à base de liants solubles dans l'eau dans des installations industrielles de peinture par pulvérisation avec ruissellement d'eau, caractérisée en ce que l'électrode de séparation (15) se trouvant dans le réservoir de séparation (14) est constituée d'une pile de disques (25) qui a un déplacement axial sur un arbre cannelé (20) et une rotation synchrone, et dont les différents disques sont pressés avec une force réglable sur les chaînes sans fin (29) se trouvant entre les disques et portant des éléments racleurs (21), les chaînes (29) étant entraînées par l'intermédiaire de roues à chaînes (22) à déplacement axial sur l'arbre cannelé (20) mais couplées avec les disques (25) et avec l'arbre cannelé (20) de façon rigide en torsion, et passant ensuite par l'intermédiaire des roues de guidage (23) dans le réservoir de dissolution (18) dans lequel la peinture est détachée des éléments racleurs (21) au moyen de brosses rotatives (26) et/ou par projection du produit du bain circulant par l'intermédiaire de pompes et de buses (27) et homogénéisée pour être plus facilement remise en solution dans un solvant.

12. Installation selon la revendication 11, caractérisée en ce que le cadre de montage (31) portant les éléments du dispositif de séparation peut être séparé du réservoir de séparation (14) et du réservoir de dissolution (18).

13. Installation selon la revendication 11, caractérisée en ce qu'il y a une gouttière (24) juste au-dessous de la chaîne (29).
